# EUROPEAN PATENT APPLICATION

(11) **EP 2 889 847 A1**
(43) Date of publication of application: **01.07.2015**
(21) Application number: 13382571.1
(22) Date of filing: 27.12.2013
(51) Int. Cl.: G07F 7/02, G07F 7/04, G06Q 30/02

(54) **Information and automated selling unit**

(71) Applicant: Ticket Point, S.L., 38650 Arona (Santa Cruz de Tenerife) (ES)
(72) Inventor: De Torres, Alain, 38650 Arona (Santa Cruz de Tenerife) (ES); Cohen, Michael, 38650 Arona (Santa Cruz de Tenerife) (ES)
(74) Representative: Díaz de Bustamante y Terminel, Isidro

(57) **Abstract**

INFORMATION AND AUTOMATED SELLING UNIT, comprising a compact and small in size module intended to providing audiovisual information about activities, trips, tickets, events, renting of vehicles and stay in hotels, and for managing the reservation and selling for attending the mentioned events in a totally automated manner, and characterized in that it is configured from a casing (2), a computing equipment (3) with specific software, speakers (4) and modem (6) for connection to Internet via Wi-Fi, 3G and wire, a thermal printer (7), purse mechanism (9) and card reader (11) and, a touchscreen (13) connected to the computer (3) for interacting with the unit, and which incorporates also a TV monitor (14) connected or not to the computing equipment (3) which is inserted into a protective metallic frame (18).

## Description

### OBJECT OF THE INVENTION

The invention, as exposed on the wording of the present specification, relates to a an information and automated selling unit, imparting several advantages and innovative characteristics, which will be described in detail below and which mean an alternative with regard to which is already known in the current state of the art.

More particularly, the object of the invention focuses on a compact and small in size module which is equipped with the electronic and computing elements necessary for providing audiovisual information about activities, trips, tickets, events, renting of vehicles and stay in hotels, and for managing the reservation and selling of tickets for attending the same in a totally automated manner, without needing the intervention of no personal operator.

### APPLICATION FIELD OF THE INVENTION

The application field of the present invention is framed within the industrial sector dedicated to manufacturing computing and electronic apparatuses and devices.

### BACKGROUND OF THE INVENTION

As it is known, in most hotels and tourists stations clients are provided with multiple additional services for making trips or other pleasure activities for whose organization is necessary, in addition to staff with the suitable training for being able to look after the users in different languages, devoting a lot of time to long explanations to the groups for information and so as they know properly the different activities they can make and the conditions of each event as well as fees, vacancies, departure times, etc.

All of that, then, in addition to a high cost for the hotel or the tour operator in charge of the organization, also means a waste of time for clients.

The objective of the present invention is, then, developing a machine which automatically accomplishes all these information and selling functions, having to be noted that, at least by the applicant, it is unknown the existence of any other information and automated selling unit presenting technical, structural and constitutive characteristics similar to the ones presented by the unit herein recommended, as it is claimed.

### EXPLANATION OF THE INVENTION

Specifically, what the invention proposes is, as it has been already indicated previously, an information and automated selling unit which is constituted from a machine in the form of compact module with the electronic and computing elements necessary for providing audiovisual information about activities, trips, events, etc., and for managing the reservation and selling of the corresponding tickets thereof, such that the user may get said information and said tickets in a totally automated manner.

Thus, the information unit recommended by the invention is configured as a vending machine for trips, tickets, events, renting of cars and hotels especially applicable for being installed in the reception desks of hotels, airports, train and bus stations, shopping malls, taxi stops and streets.

The unit consists of a stainless steel platform or casing with a vandal proof touchscreen, a 32 inches display located in its top portion where the promo videos of the different products and the activation of the client for making a purchase in the terminal itself are displayed.

The unit allows the client consulting information about the different products, their availabilities and prices followed by a reservation and purchase formalizing process.

The purchase can be made via the different payment methods, such as in cash, with credit card or payment at destination/reception.

When the client makes a reservation, this is transmitted via the Internet connection to a head office where the agents can process it.

To do so, in said casing are fitted the following elements:

Technical specifications:
- large monitor with 32" wide-screen display, through which the audiovisual recordings related to the product managed by the unit so as to inform the user are emitted;
- computing hardware equipment or computer and Internet connection via Wi-Fi, 3G and ADSL wireline;
- a vandal proof 19" touchscreen, through which the user interacts with the unit for browsing through the different menus and options of the computing software program which the computing equipment incorporates;
- a thermal printer for printing and dispensing the tickets purchased by the users;
- a purse mechanism with bill slot for Euros and coin dispenser for change in order to charge in cash the prices for the services;
- TPV terminal with credit card reader so as to allow the payment for the services through debit and credit card;
- amplified speakers;
- and different compartments for the computing equipments and for storing money.

In the light of the aforementioned, it is stated that the described information and automated selling unit represents an innovative structure with characteristics unknown so far to this end, reasons which in combination with its practical utility, provide it with enough basis to obtain the exclusivity privilege which is applied for.

### DESCRIPTION OF THE DRAWINGS

In order to complement the description being fulfilled of the invention and with the aim of helping to a better understanding of the characteristics characterizing it, the present specification is accompanied, as an integral part thereof, by a set of plans, in which by way of illustration and not of limitation, is represented the following:
Figure number 1. Shows a front perspective view of an exemplary embodiment of the information and automated selling unit object of the invention, wherein the main parts it consist of and its outer general configuration can be seen.
Figure number 2. Shows a rear perspective view of the exemplary information and automated selling unit, according to the invention, shown in the present figure.
Figure number 3. Shows a perspective view of the back of the unit object of the invention, represented in this case without the top monitor and with the back access doors of the casing open, so that the functional elements and apparatuses which it inside incorporates can be seen.

### PREFERRED EMBODIMENT OF THE INVENTION

In light of the mentioned figures, and according to the numbering taken, it can be seen on them an example of preferred embodiment of the invention, which comprises the parts and elements described in detail below.

Thus, as can be seen in said figures, the unit (1) in question is configured from a casing (2) configured as a compact cabinet, tall and thin, and made in metallic sheet or a similar material, which inside houses a computing equipment (3) provided with a specific software program and, among other conventional components, with speakers (4) of amplified sound, conveniently installed between holes (5) provided in the casing, and a modem (6) for connection to Internet via Wi-Fi, 3G and wire through ADSL line, all of that provided with the corresponding connection ports.

The casing houses, also, a thermal printer (7) for printing tickets it dispenses through a dispensing slot (8) provided for this purpose in the front thereof; a purse mechanism (9) with insertion mouth (10) also located in the front of the casing; and a card reader TPV terminal (11) with the corresponding insertion slot (12) equally located in an accessible area of the casing.

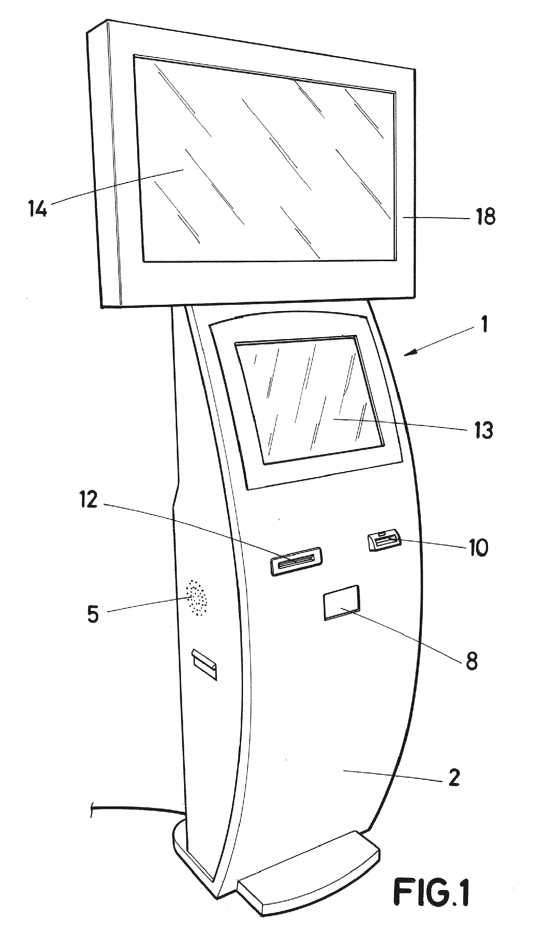

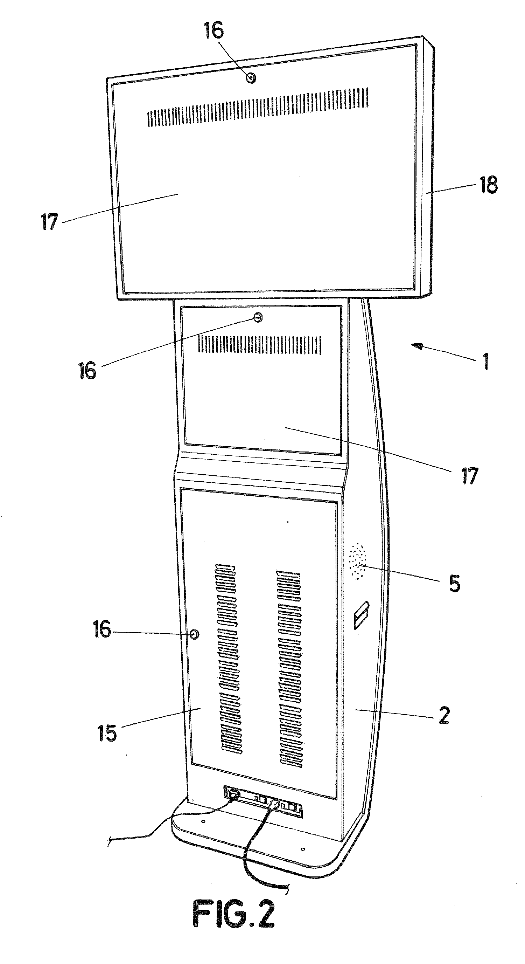

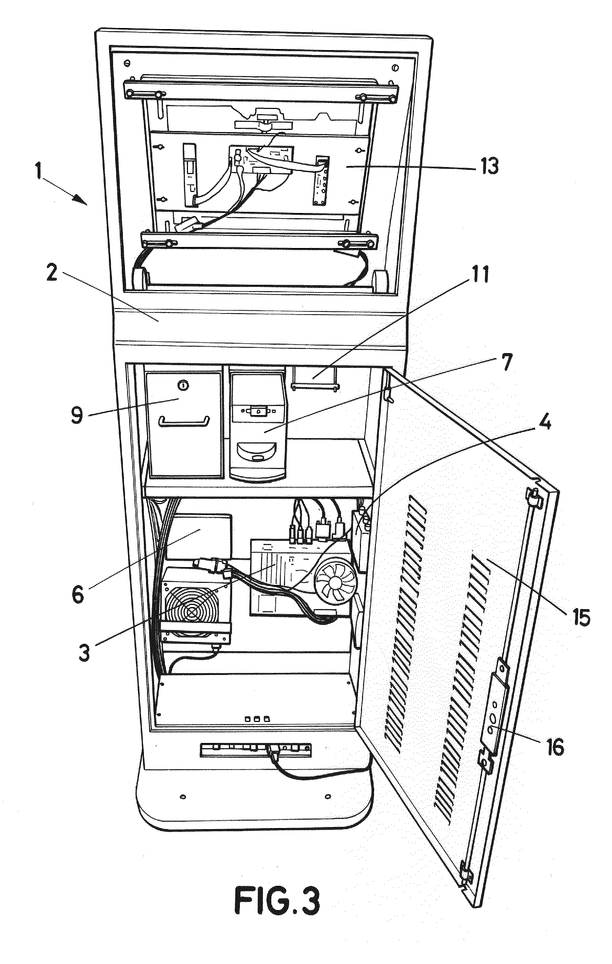

As can be seen in figure 2 y 3, said elements are housed within the casing (2) which, in its back, is provided with an access door (15) with ventilation which, provided with a safety lock (16), allows the access to those elements for the maintenance and repairing jobs being required.

Likewise, the casing (2) incorporates, installed in an accessible manner in its front, a 19" vandal proof touchscreen (13) which is internally conveniently connected to the computer or computing equipment (3) so as to allow the user gain access to the software and interact with the unit to get information and, where appropriate, the tickets he/she desires.

This touchscreen (13), is accessible through the back of the casing (2) via a practicable cover (17) which, like the access door (15), has also ventilation and safety lock (16).

Finally the unit has, incorporated in the top of the casing (2), a large TV monitor (14), preferably of 32" through which audiovisual recordings related to the product managed by the unit are emitted, which can or not be connected to the computing equipment (3) of said unit for playing recordings stored therein or for playing recordings recorded in other devices for audiovisual storing.

It is worth noting that this monitor (14) is inserted into a protective metallic frame (18) which is provided in the back, as in the case of the touchscreen (13), with a practicable cover (17) for gaining access to the functional elements thereof, with ventilation and safety lock (16).

Having sufficiently described the nature of the present invention, as well as a way of putting it into practice, it is not considered necessary to make a more extensive explanation in order that any expert in this area will understand its scope and the advantages that can be derived from it, making known that, within reason it could be put into practice in other embodiments differing in detail from that indicated by way of example, and which will obtain the same degree of protection, provided that they do not alter, change, or modify its fundamental principle.

## Claims

1. INFORMATION AND AUTOMATED SELLING UNIT, applicable for providing audiovisual information about trips, events, renting of vehicles and hotels, and for managing the reservation and selling of tickets thereof in a totally automated manner, **characterized in that** it is configured from a casing (2), inside of which, a computing equipment (3) with specific software, speakers (4) and modem (6) for connection to Internet via Wi-Fi, 3G and wire, a thermal printer (7), purse mechanism (9) and card reader (11) are housed and, installed in an accessible manner through its front, a touchscreen (13) connected to the computer (3) for interacting with the unit.

2. INFORMATION AND AUTOMATED SELLING UNIT, according to claim 1, **characterized in that**, incorporated in the top of the casing (2), it incorporates a large TV monitor (14), connected or not to the computing equipment (3) for playing recordings stored therein or for playing recordings recorded in other devices for audiovisual storing.

3. INFORMATION AND AUTOMATED SELLING UNIT, according to claim 2, **characterized in that** the touchscreen is of 19" and the TV monitor (14) is a 32" monitor.

4. INFORMATION AND AUTOMATED SELLING UNIT, according to claim 2 or 3, **characterized in that** the monitor (14) is inserted into a protective metallic frame (18).
